# FASCICULE DE BREVET EUROPEEN

(11) **EP 2 994 322 B1**
(45) Date de publication et mention de la délivrance du brevet: **09.08.2017**
(21) Numéro de dépôt: 14726693.6
(22) Date de dépôt: 22.04.2014
(51) Int. Cl.: B43K 29/00, G06F 3/0354

(54) **DISPOSITIF MANUEL ADAPTE POUR UN ECRAN CAPACITIF**
MANUELLE VORRICHTUNG FÜR EINEN KAPAZITIVEN BILDSCHIRM
MANUAL DEVICE DESIGNED FOR A CAPACITIVE SCREEN

(30) Priorité: 06.05.2013 FR 1354146
(43) Date de publication de la demande: 16.03.2016
(73) Titulaire: Société BIC, 92110 Clichy (FR)
(72) Inventeur: ROLION, Franck, 95270 Asnières-sur-Oise (FR)
(74) Mandataire: Milien, Jean-Baptiste Aurélien
(86) Numéro de dépôt international: PCT/FR2014/050971
(87) Numéro de publication internationale: WO 2014/181053

(56) Documents cités:
- EP-A1- 2 466 424
- DE-U1- 20 312 529
- US-A1- 2011 175 854
- US-A1- 2012 075 258
- US-A1- 2013 106 771

## Description

### DOMAINE DE L'INVENTION

L'invention concerne un dispositif manuel permettant d'utiliser un écran capacitif, comme par exemple une tablette graphique. Un tel dispositif est capable d'interférer/interagir avec l'écran capacitif de sorte que sa présence en un point donné dudit écran capacitif est détectable par ce dernier.

### ETAT DE LA TECHNIQUE ANTERIEURE

On connaît des dispositifs manuels comprenant un corps de préhension longitudinal et un coussinet pour écran capacitif monté sur une extrémité dudit corps. Dans ces dispositifs classiques, le corps de préhension doit nécessairement être conducteur de courant électrique et être en contact électrique avec le coussinet, et ce, pour que pendant l'utilisation la main de l'utilisateur soit en contact électrique avec le coussinet par l'intermédiaire du corps, afin que le dispositif interagisse avec un écran capacitif. Ceci implique des contraintes de conception, de fabrication et de coûts.
EP2466424 divulgue un stylo tactile. DE20312529 divulgue un stylet pour écran tactile d'assistant numérique personnel (PDA).

### PRESENTATION DE L'INVENTION

Le but de la présente invention est de remédier au moins substantiellement aux inconvénients mentionnés ci-avant.

L'invention atteint ce but en proposant un dispositif manuel tel que défini par la revendication 1, ce dispositif manuel comprenant un corps de préhension longitudinal (ci-après « le corps ») et un coussinet pour écran capacitif (ci-après « le coussinet ») monté sur une extrémité dudit corps, dans lequel le corps est isolant tandis que le coussinet est conducteur, une tige en matériau polymérique, chargé avec au moins un matériau conducteur et/ou comprenant un revêtement conducteur, étant en contact électrique avec le coussinet et s'étendant longitudinalement à l'intérieur du corps.

Le dispositif manuel forme par exemple, un stylet pour écran capacitif, un stylo comprenant un embout d'écriture classique et un embout pour écran capacitif, ou plus généralement tout instrument manuel comprenant à une de ses extrémités un embout configuré pour interagir avec un écran capacitif.

On comprend que le dispositif manuel est de type passif. Pour rappel, un instrument dit « passif » est un instrument qui n'a pas besoin d'être alimenté par une source d'énergie pour assurer son fonctionnement. A l'inverse, un instrument dit « actif » fonctionne à l'aide d'une source d'énergie, par exemple une batterie électrique interne. En d'autres termes, le dispositif manuel ne comprend aucune source d'énergie, notamment électrique, interagissant avec le coussinet.

Par la suite, et sauf indication contraire, par le terme « conducteur » ou « conductrice » on comprend « conducteur/conductrice de courant électrique ». Inversement, par la suite, et sauf indication contraire, par le terme « isolant » ou « isolante » on comprend « isolant/isolante vis-à-vis du courant électrique ».

On comprend que le coussinet (en anglais « pad ») est une terminaison configurée pour interagir avec un écran capacitif. Le coussinet est conducteur (grâce à son matériau de fabrication, ou grâce à un revêtement). La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

On comprend également que le corps permet la préhension du dispositif manuel, et ce pour le manipuler, notamment pour interagir avec un écran capacitif. Le corps s'étend longitudinalement selon une direction longitudinale ou direction de longueur. L'étendue du corps selon cette direction longitudinale est considérée par la suite comme la longueur du corps. Le corps est de préférence rectiligne. La tige s'entend également selon cette direction longitudinale à l'intérieur du corps. Le corps est donc creux de manière à recevoir la tige. La tige et le corps sont sensiblement parallèles. Selon une variante, le corps et la tige sont coaxiaux. Ceci permet d'obtenir une structure simple à fabriquer.

La tige peut être pleine ou creuse. La tige peut également être de forme sensiblement cylindrique de section circulaire, elliptique, polygonale, etc. La longueur et la forme de la tige ne sont pas limitées. Par exemple la tige peut s'étendre sur toute la longueur du corps, ou sur seulement une portion de longueur inférieure à la longueur du corps. La dimension de la tige selon la direction longitudinale est considérée par la suite comme la longueur de la tige.

La tige est en matériau polymérique, c'est-à-dire un matériau à base de polymère(s). Selon une variante ce matériau polymérique est chargé avec au moins un matériau conducteur. Selon une autre variante le matériau polymérique est enrobé au moins partiellement d'un revêtement conducteur. Selon encore une autre variante, le matériau de la tige est chargé en matériau conducteur et est enrobé d'un revêtement conducteur. En d'autres termes la tige est fabriquée en matériau polymérique et comprend dans sa masse une charge d'au moins un matériau conducteur ou présente sur sa surface un revêtement conducteur, ou bien les deux.

Par exemple, le matériau polymérique est un thermoplastique. Par exemple, le matériau polymérique comprend un ou plusieurs des composés parmi l'acrylonitrile butadiène styrène (également connus sous l'acronyme ABS), acrylonitrile méthacrylate de méthyle (également connus sous l'acronyme AMMA), acrylonitrile styrène acrylate (également connus sous l'acronyme ASA), acétate de cellulose (également connus sous l'acronyme CA), acétobutyrate de cellulose (également connus sous l'acronyme CAB), acétopropionate de cellulose (également connus sous l'acronyme CAP), polystyrène expansé (également connus sous l'acronyme EPS), éthylène tétrafluoroéthylène (également connus sous l'acronyme ETFE), éthylène-alcool vinylique (également connus sous l'acronyme EVAL ou EVOH), perfluoro éthylène propylène (également connus sous l'acronyme FEP ou PFEP), méthylméthacrylate-butadiène-styrène (également connus sous l'acronyme MBS), méthylcellulose (également connus sous l'acronyme MC), polyamide (également connus sous l'acronyme PA), polycaprolactame (également connus sous l'acronyme PA6), polyamide-imide (également connus sous l'acronyme PAI), polyacrylonitrile (également connus sous l'acronyme PAN), polybutène-1 (également connus sous l'acronyme PB-1), polybutylène téréphtalate ou poly(téréphtalate de butylène) (également connus sous l'acronyme PBT), polycarbonate (également connus sous l'acronyme PC), polychlorotrifluoroéthylène (également connus sous l'acronyme PCTFE), polyéthylène (également connus sous l'acronyme PE), polyéthylène haute densité (également connus sous l'acronyme PE-HD), polyéthylène basse densité (également connus sous l'acronyme PE-LD), polyéthylène à basse densité linéaire (également connus sous l'acronyme PE-LLD), polyéthylène à ultra haute masse molaire (également connus sous l'acronyme PE-UHMW), copolymère bloc éther-amide (également connus sous l'acronyme PEBA), polyestercarbonate (également connus sous l'acronyme PEC), polyétheréthercétone (également connus sous l'acronyme PEEK), polyétherimide (également connus sous l'acronyme PEI), polyéthercétone (également connus sous l'acronyme PEK), poly(naphtalate d'éthylène) (également connus sous l'acronyme PEN), polyéthersulfone (également connus sous l'acronyme PESU), poly(éthylène téréphtalate) (également connus sous l'acronyme PET), perfluoroalkoxy (également connus sous l'acronyme PFA), polycétone (également connus sous l'acronyme PK), polyméthacrylate de méthyle (également connus sous l'acronyme PMMA), polyméthylpentène (également connus sous l'acronyme PMP), polyoxyméthylène ou polyacétal ou polyformaldéhyde (également connus sous l'acronyme POM), polypropylène ou polypropène (également connus sous l'acronyme PP), poly(phénylène éther) (également connus sous l'acronyme PPE), poly(oxyde de phénylène) (également connus sous l'acronyme PPO), poly(oxyde de propylène) (également connus sous l'acronyme PPOX), poly(sulfure de phénylène) (également connus sous l'acronyme PPS), polystyrène (également connus sous l'acronyme PS), polysulfone (également connus sous l'acronyme PSU), polytétrafluoroéthylène (également connus sous l'acronyme PTFE), polyuréthane (également connus sous l'acronyme PUR), poly(acétate de vinyle) (également connus sous l'acronyme PVAC), poly(alcool vinylique) (également connus sous l'acronyme PVAL), polychlorure de vinyle (également connus sous l'acronyme PVC), polyfluorure de vinylidène (également connus sous l'acronyme PVDF), poly(fluorure de vinyle) (également connus sous l'acronyme PVF), styrène-acrylonitrile (également connus sous l'acronyme SAN), silicone (également connus sous l'acronyme SI), styrène anhydride maléique (également connus sous l'acronyme SSMA ou SMAnh), polyéfine, polyester. De manière plus générale, le matériau polymérique est un matériau polymérique organique de synthèse ou polymère organique de synthèse. De tels matériaux sont particulièrement bien adaptés à la fabrication de la tige à échelle industrielle.

Une charge est un matériau additif introduit dans le matériau polymérique lors de la fabrication de la tige. Ainsi, un matériau polymérique chargé avec au moins un matériau conducteur est un matériau polymérique dans la masse duquel on a introduit lors de la fabrication de la tige, au moins un matériau conducteur. Grâce à cette charge en matériau(x) conducteur(s) la tige présente des propriétés conductrices. Par exemple, le matériau polymérique est chargé d'au moins 2% en masse en matériau conducteur.

Par exemple, la charge en matériau conducteur comprend un ou plusieurs des composés parmi le noir de carbone, les nanotubes de carbone, ou des particules métalliques.

Un revêtement conducteur est par exemple un dépôt d'enduit, de peinture ou équivalent qui présente des propriétés conductrices, ou bien un dépôt d'une feuille en matériau conducteur, par exemple une feuille métallique.

Ainsi, grâce à la charge en matériau(x) conducteur(s) et/ou au revêtement conducteur, la tige est conductrice. La tige est directement ou indirectement en contact électrique avec le coussinet. Par exemple, une tige comprenant une patte touchant le coussinet forme une tige directement reliée/en contact électrique avec le coussinet. Selon un autre exemple, une tige en contact avec le coussinet par l'intermédiaire d'un élément conducteur distinct de la tige et du coussinet, par exemple un fil métallique, forme une tige indirectement reliée/en contact électrique avec le coussinet.

Les inventeurs ont constaté avec surprise que lorsque l'utilisateur manipule le dispositif manuel en tenant le corps de préhension par une zone en recouvrement longitudinal avec la tige, la surface d'un écran capacitif est sensible à la présence, de préférence au contact, du coussinet, et ce bien qu'il n'y ait pas de contact électrique direct entre la main et la tige, ni entre la main et le coussinet. En effet, il est très généralement admis par l'homme du métier que pour qu'un coussinet interagisse avec un écran capacitif, il faut impérativement un contact électrique direct entre le coussinet et la main de l'utilisateur. Bien entendu, l'écran n'est pas sensible au dispositif manuel s'il n'est pas manipulé par une main, ou si la main n'est pas placée sur une zone en recouvrement avec la tige.

Ainsi, grâce à cet effet surprenant, on peut utiliser tout corps de préhension non conducteur et s'affranchir des contraintes de conception, de fabrication et de coûts des dispositifs classiques permettant d'utiliser des écrans capacitifs.

Par ailleurs, une tige fabriquée à base de matériau polymérique chargé ou revêtue avec un matériau conducteur présente l'avantage d'être facilement mise en oeuvre à un coût adapté aux productions industrielles en grandes quantités. En outre, le matériau de cette tige est compatible avec les matériaux couramment utilisés pour la fabrication du corps, ce qui facilite le montage de la tige au sein du corps et son adaptabilité aux corps de dispositifs manuels déjà existants.

Par « recouvrement longitudinal » on entend que deux éléments sont disposés dans une même zone longitudinale, ou dans une même position longitudinale. En d'autres termes, lorsque l'utilisateur manipule le dispositif manuel et qu'il place sa main dans une zone longitudinale du corps où s'étend la tige, un écran capacitif détecte la présence du coussinet lorsque ce dernier est approché ou contacte l'écran capacitif.

En d'autres termes, si la tige s'étend longitudinalement sur une partie réduite du corps, par exemple sur 10% de la longueur du corps, la partie de préhension du corps de préhension disposée sur ces mêmes 10% de longueur du corps forment une partie de préhension en recouvrement avec la tige. En manipulant le dispositif manuel par cette partie de préhension en recouvrement avec la tige, un écran capacitif détecte la présence du dispositif lorsque le coussinet est approché ou contacte l'écran.

Avantageusement, la tige s'étend sur plus de 10% de la longueur du corps.

Ceci permet d'obtenir une partie de préhension s'étendant sur au moins 10% de la longueur du corps. L'ergonomie du dispositif manuel s'en retrouve améliorée.

Avantageusement, le coussinet est monté sur le corps par l'intermédiaire d'une embase conductrice tandis que la tige est en contact électrique avec le coussinet par l'intermédiaire de l'embase.

On comprend que l'embase est un élément intermédiaire disposé entre le coussinet et le corps. Une telle embase présente l'avantage de faciliter le montage du coussinet sur le corps. L'embase permet également de faciliter le contact électrique entre la tige et le coussinet lors de l'assemblage du dispositif manuel.

Avantageusement, la tige et l'embase forment une seule et même pièce.

Ceci permet de réduire le nombre de pièces au sein du dispositif manuel. On simplifie ainsi sa structure et les coûts de fabrications. On comprend donc que l'embase et la tige sont fabriquées dans un seul et même matériau, et forment une pièce monobloc. La conduction électrique entre l'embase et la tige est ainsi optimisée.

Avantageusement, le coussinet est directement (i.e. sans élément intermédiaire) monté sur l'embase. Ainsi, lorsque l'embase et la tige forment une seule et même pièce dans un seul et même matériau, on peut considérer que la tige est directement en contact électrique avec le coussinet, ce qui améliore la qualité du contact électrique entre ces deux éléments.

Avantageusement, le dispositif comprend une pointe d'écriture ou équivalent.

On comprend que le corps de préhension longitudinal présente deux extrémités opposées, une extrémité portant le coussinet, l'autre extrémité portant la pointe d'écriture. Par exemple, la pointe d'écriture ou équivalent est une pointe de stylo bille, une pointe de stylo feutre, une pointe de mine de crayon, une pointe rigide pour écran résistif, un pointe de poinçon, ou tout autre embout de dispositif manuel.

Avantageusement, la pointe d'écriture est alimentée par un réservoir, ledit réservoir étant disposé en tout ou partie à l'intérieur de la tige.

On comprend que dans cette configuration la tige est creuse, et que la cavité formée à l'intérieur de la tige reçoit une partie ou l'intégralité du réservoir de la pointe. Par exemple, le réservoir est un réservoir d'encre pour stylo bille, un réservoir d'encre libre, un réservoir fibreux pour stylo feutre ou encore un réservoir de mine de crayon.

En disposant la tige autour du réservoir, on diminue l'encombrement du dispositif manuel, ce qui améliore son ergonomie. On réduit aussi la masse de la tige en utilisant une tige creuse, ce qui est avantageux du point de vue de la facilité et de l'agrément d'utilisation.

Avantageusement, le corps est en matériau polymérique isolant, en bois, en céramique, en verre, ou équivalent.

Par « équivalent » on entend tout matériau isolant pouvant former un corps de préhension, par exemple de la bakélite™, du carton, des matériaux à base de de bois, de verre ou de céramique, un matériau composite à base d'un ou plusieurs matériaux mentionnés ci-avant, par exemple à base de bois et de matériau polymérique, etc. Par exemple, le matériau polymérique est un thermoplastique, et plus particulièrement comprend un ou plusieurs des composés parmi la liste d'exemples mentionnée ci-avant.

Le corps présente une surface (ou paroi) extérieure, une couche en matériau conducteur étant disposée sur la surface extérieure du corps.

On comprend que la couche en matériau conducteur est isolée de la tige et du coussinet. En d'autres termes, la couche en matériau conducteur ne contacte pas mécaniquement et n'est pas en contact électrique avec le coussinet et/ou l'embase conductrice et/ou la tige. De manière générale, on comprend qu'en étant isolée du coussinet, la couche n'est en contact ni direct, ni indirect, par exemple via l'embase, la tige, ou un autre élément, avec le coussinet. Les inventeurs ont constaté avec surprise qu'une telle couche conductrice disposée sur la surface extérieure du corps améliore les interactions du dispositif manuel avec un écran capacitif. En d'autres termes, un écran capacitif réagit plus facilement/détecte plus facilement la présence du coussinet du dispositif manuel lorsque le corps présente cette couche conductrice.

Avantageusement, la couche s'étend au moins en partie en recouvrement longitudinal avec la tige.

Lorsque la couche est en recouvrement longitudinal avec la tige, les interactions avec un écran capacitif sont encore plus facilement détectées par ce dernier.

Avantageusement, la couche s'étend sur au moins 30% de la longueur de la tige.

Un tel recouvrement longitudinal permet d'assurer des interactions optimales avec un écran capacitif.

Avantageusement, la couche comprend une feuille métallique ou un enduit conducteur, par exemple une peinture métallisée.

Des tels matériaux sont faciles à mettre en oeuvre, et présentent des performances satisfaisantes.

Avantageusement, la tige est espacée (ou radialement espacée) du corps. On comprend donc que la tige ne contacte pas le corps, et ce en aucun point. En d'autres termes, la tige est distante (ou radialement distante) du corps. On comprend donc qu'une lame d'air est interposée entre la tige et le corps. Cette lame d'air est une couche isolante supplémentaire qui renforce l'effet capacitif du dispositif manuel (entre les doigts de l'utilisateur et la tige, ou entre la couche en matériau conducteur et la tige).

Avantageusement, la tige et le corps sont sensiblement cylindriques, la tige et le corps présentant chacun une surface extérieure de forme sensiblement cylindrique, la distance radiale entre la surface extérieure de la tige et la surface extérieure du corps étant inférieure à 5 mm (cinq millimètres). Une telle distance permet d'obtenir un effet capacitif optimal. On comprend qu'une forme sensiblement cylindrique est une forme par exemple dont la section de la surface à l'extérieur et la section surface à l'intérieur sont de forme différente, ces formes pouvant être section circulaire, elliptique, polygonale, etc.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un dispositif manuel selon un premier exemple, vu en perspective,
- la figure 2 représente le dispositif manuel de la figure 1, vu en éclaté en perspective,
- la figure 3 représente le dispositif manuel de la figure 1 vue selon le plan de coupe III,
- la figure 4 représente un dispositif manuel selon un deuxième exemple correspondant à un mode de réalisation, vu en perspective, et
- la figure 5 représente le dispositif manuel de la figure 4 vu selon le plan de coupe V.

### DESCRIPTION DETAILLEE D'EXEMPLES DE REALISATION

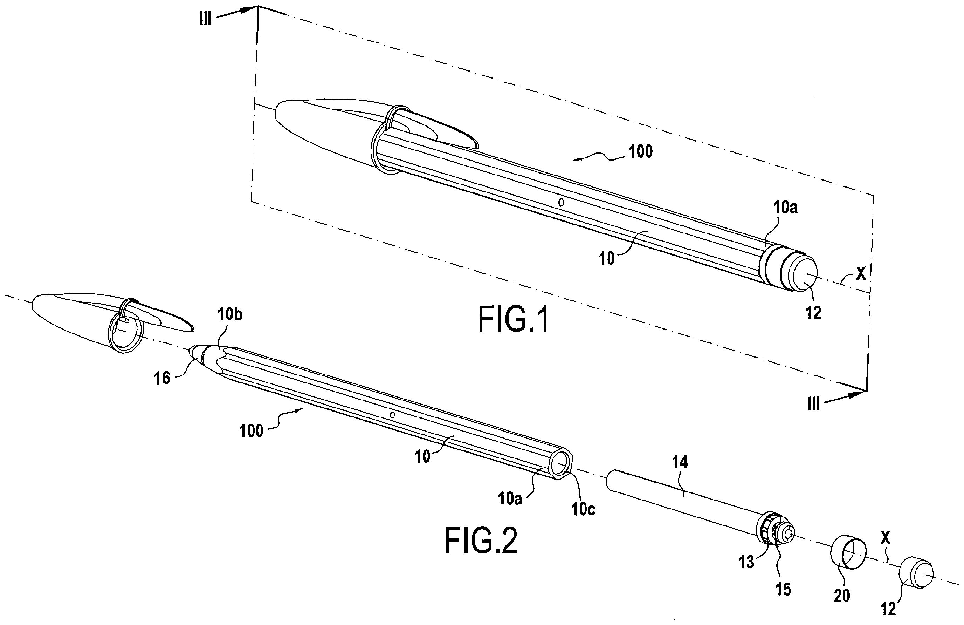

Un premier exemple d'un dispositif manuel 100 est décrit en référence aux figures 1 à 3.

Le dispositif manuel 100 comprend un corps de préhension longitudinal 10, un coussinet pour écran capacitif 12, et une tige 14 s'étendant longitudinalement à l'intérieur du corps 10. Le dispositif manuel 100, et plus particulièrement le corps 10 et la tige 14 s'étendent selon la direction longitudinale X. Bien entendu, le corps 10 est creux de manière à recevoir la tige 14. Le corps 10 est isolant tandis que le coussinet 12 et la tige 14 sont conducteurs. Le coussinet 12 et la tige 14 sont en contact électrique.

Le corps 10 présente deux extrémités 10a et 10b. L'extrémité 10a forme l'extrémité arrière, ou première extrémité, d'un stylo tandis que l'extrémité 10b forme l'extrémité avant, ou seconde extrémité, d'un stylo. Dans cet exemple, à l'exception de l'extrémité avant 10b qui présente une forme sensiblement tronconique, le corps 10 présente une forme sensiblement cylindrique de section hexagonale à l'extérieur et de section circulaire à l'intérieur.

Le dispositif manuel 100 comprend une pointe d'écriture 16 montée sur l'extrémité 10b du corps 10 tandis que le coussinet 12 est monté sur l'extrémité 10a. Dans cet exemple, le dispositif manuel 100 forme ainsi un dispositif deux-en-un formant un stylo d'écriture et un stylet pour écran capacitif.

Le coussinet 12 est monté sur le corps 10 par l'intermédiaire d'une embase 13. L'embase 13 est donc montée sur le corps 10 tandis que le coussinet 12 est monté sur l'embase 13. Dans cet exemple, le coussinet 12 est en contact électrique avec la tige 14 par l'intermédiaire de l'embase 13.

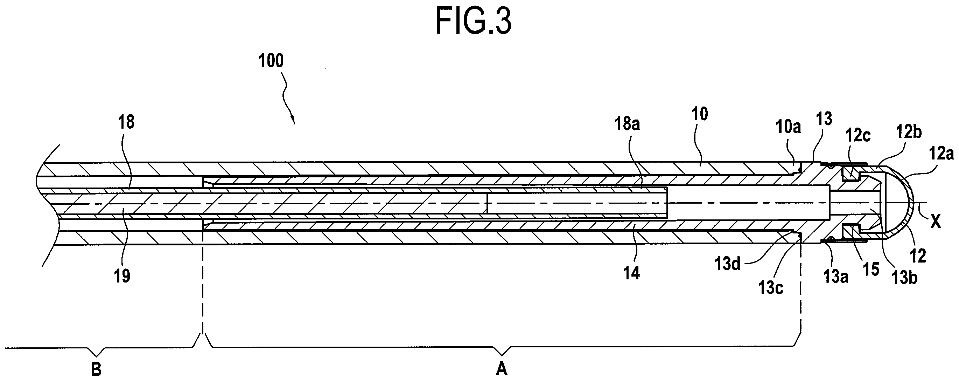

Le coussinet 12 présente une extrémité distale 12a de coopération avec un écran capacitif, cette extrémité 12a présentant dans cet exemple une forme sensiblement hémisphérique creuse. L'extrémité 12a est disposée dans le prolongement d'une partie de fixation 12b de forme sensiblement cylindrique creuse. Cette partie de fixation 12b présente une collerette 12c disposée au voisinage de l'extrémité libre de la partie de fixation 12b, à l'intérieur de la partie de fixation 12b. Cette collerette 12c coopère par encliquetage avec une gorge annulaire 15 ménagée dans l'embase 13. Un anneau 20 est emmanché à force autour de la partie de fixation 12b et de l'embase 13 et serti sur l'embase 13 (cf. Fig.3). Cet anneau 20 verrouille l'encliquetage du coussinet 12 sur l'embase 13. L'embase 13 présente un épaulement 13a recevant l'anneau 20 en appui.

L'embase 13 présent un trou traversant 13b selon la direction longitudinale X formant un évent pour équilibrer la pression interne du volume formée entre le coussinet 12 et l'embase 13 et la pression à l'extérieur dudit volume.

L'embase 13 présente un épaulement 13c qui coopère avec le corps 10, par exemple par collage ou soudage (thermosoudage, soudure par ultrason, etc.). L'embase 13 et la tige 14 forment une seule et même pièce formée dans un seul et même matériau. Ainsi, dans cet exemple, la tige 14 est fixée sur le corps 10 par l'intermédiaire de l'embase 13. La zone de raccord entre l'embase 13 et la tige 14 présente une surépaisseur 13d de centrage qui coopère par complémentarité de forme avec une dépression 10c formée dans l'extrémité arrière 10a du corps 10. Par ailleurs, dans l'exemple où l'embase 13 est soudée au corps 10, la surépaisseur 13d contribue aussi à la fixation de l'embase 13 sur le corps 10. En effet, la surépaisseur 13d étant en contact privilégiée avec le corps, elle forme un cordon de soudure. Dans cet exemple, la surépaisseur 13d et le la dépression 10c sont de forme sensiblement annulaire.

La tige 14 est creuse. L'évent 13c de l'embase 13 débouche dans la cavité interne de la tige creuse 14. La tige 14 s'étend à l'intérieur du corps 10 depuis l'extrémité arrière 10a. Comme représenté sur la figure 3, la tige 14 s'étend sur plus de 10% de la longueur du corps 10, une longueur étant de manière générale considérée selon la direction longitudinale X. Dans cet exemple, la tige s'étend sur environ 50% du corps 10, depuis l'extrémité arrière 10a. En d'autres termes, considérés selon la direction longitudinale X, la tige 12 s'étend sur environ la moitié du corps 10.

La pointe d'écriture 16, dans cet exemple une pointe à bille, est alimentée en encre par un réservoir 18 contenant une encre 19. Comme représenté sur la figure 3, le réservoir 18 s'étend en partie à l'intérieur de la tige 14. Plus particulièrement, l'extrémité arrière 18a du réservoir 18, c'est-à-dire l'extrémité du réservoir disposée à l'opposé de la pointe d'écriture 16, est disposée à l'intérieur de la tige 14. Plus généralement, le réservoir d'encre s'étend longitudinalement selon la direction longitudinale X en tout ou partie à l'intérieur de la tige 14. Dans cet exemple, une portion d'environ 50% depuis l'extrémité arrière 18a du réservoir 18 est disposée à l'intérieur de la tige. En d'autres termes, dans cet exemple, considéré selon la direction longitudinale X, environ la moitié arrière du réservoir 18 est disposé à l'intérieure de la tige 14.

Dans cet exemple, le diamètre extérieur de la tige est de 5.4 mm (millimètre) tandis que le diamètre intérieur du corps est 5.52 mm. De manière générale, on comprend que la tige 14 est espacée du corps 10. L'épaisseur du corps est comprise entre 1.2 mm et 1.5 mm. Ainsi, la distance radiale entre la surface (ou paroi) extérieure du corps et la surface (ou paroi) extérieure de la tige est comprise entre 1.26 mm et 1.56 mm. Plus généralement, les inventeurs ont constaté que le dispositif manuel 100 fonctionne de manière satisfaisante lorsque la distance radiale entre la surface extérieure du corps et la surface extérieure de la tige est inférieure à 5 mm.

Dans cet exemple, le corps 10 est en PS, la tige 12 et l'embase 13 sont ABS comprenant une charge de 3% en masse de nanotubes de carbone. Le coussinet 14 est en matériau élastomère contenant des éléments conducteurs. Dans cet exemple, le coussinet 14 est en silicone chargé en particules de noir de carbone. L'anneau 20 est en cuivre chromé.

Ainsi, grâce aux matériaux utilisés le coussinet 12 est en contact électrique indirect avec la tige 14 par l'intermédiaire de l'embase 13. L'anneau 20 étant en métal, il participe également au contact électrique entre l'embase 13 et le coussinet 12, mais sa fonction principale est le blocage mécanique du coussinet 12 sur l'embase 13.

Lorsque l'utilisateur manipule le dispositif manuel 100 en le prenant par une zone du corps 10 en recouvrement selon la direction longitudinale X avec la tige 14, un écran capacitif est sensible au contact du coussinet 12. En d'autres termes, lorsque l'utilisateur manipule le dispositif manuel 100 et qu'il place sa main dans une zone longitudinale du corps 10 où s'étend la tige 14, un écran capacitif détecte la présence du coussinet 12 lorsque ce dernier est approché ou contacte l'écran capacitif. Sur la figure 3 la zone A du corps 10 forme la zone de préhension du corps 10 en recouvrement longitudinal avec la tige 14 tandis que la zone B du corps 10 forme une zone de préhension qui n'est pas en recouvrement longitudinal avec la tige 14.

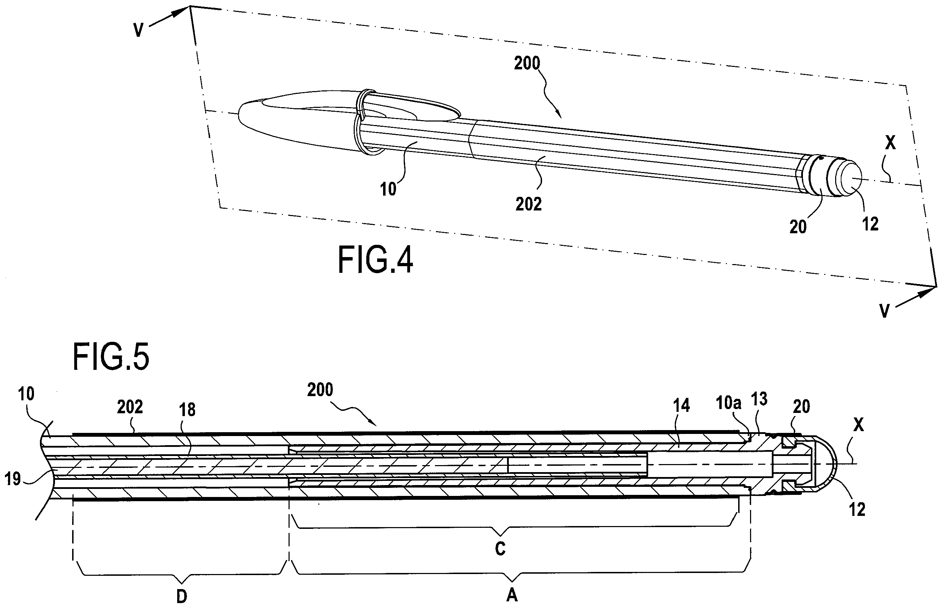

Un deuxième exemple d'un dispositif manuel 200 est maintenant décrit en référence aux figures 4 et 5. La seule différence avec le dispositif manuel 100 du premier exemple est la présence d'une couche en matériau conducteur sur la surface extérieure du corps. Ainsi, tous les éléments communs entre le premier et le deuxième exemple ne sont pas décrits à nouveau et conservent le même signe de référence.

Dans le deuxième exemple, le corps 10 présente sur sa surface extérieure une couche 202 en matériau conducteur. Dans cet exemple, la couche 202 comprend une feuille métallique collée par des moyens connus par ailleurs, par exemple par thermocollage, sur la surface extérieure du corps 10. La feuille métallique est en aluminium. Comme représenté sur la figure 5, la couche 202 ne s'étend pas jusqu'à l'extrémité arrière 10a du corps. Il n'y a donc pas de contact électrique entre la couche 202 et l'embase 13, l'anneau 20 ou le coussinet 12. En d'autres termes, la couche 202 est isolée de l'embase 13, de l'anneau 20 et du coussinet 12 (et bien entendu de la tige 14).

Cette couche 202 s'étend sur une zone C en recouvrement longitudinal sur environ toute la longueur de la tige 14. Par ailleurs la couche 202 s'étend sur une zone D qui n'est pas en recouvrement avec la tige. La zone D forment une zone de préhension supplémentaire par rapport à la zone de préhension A. Ainsi, grâce au revêtement 202, la zone de préhension efficace pour utiliser le coussinet 12 sur un écran capacitif est accrue, ce qui améliore l'ergonomie du dispositif manuel 200 vis-à-vis du dispositif manuel 100.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif manuel comprenant un corps de préhension longitudinal (10) et un coussinet pour écran capacitif (12) monté sur une extrémité (10a) dudit corps (10), dans lequel le corps (10) est isolant tandis que le coussinet (12) est conducteur, dans lequel une tige (14) en matériau polymérique, chargé avec au moins un matériau conducteur et/ou comprenant un revêtement conducteur, est en contact électrique avec le coussinet (12) et s'étend longitudinalement à l'intérieur du corps (10), et dans lequel le corps (10) présente une surface extérieure, une couche en matériau conducteur (202) étant disposée sur la surface extérieure du corps (10), ladite couche (202) étant isolée du coussinet (12).

2. Dispositif selon la revendication 1 dans lequel la tige (14) s'étend sur plus de 10% de la longueur du corps (10).

3. Dispositif (100, 200) selon la revendication 1 ou 2, dans lequel le coussinet (12) est monté sur le corps (10) par l'intermédiaire d'une embase conductrice (13) tandis que la tige (14) est en contact électrique avec le coussinet (12) par l'intermédiaire de l'embase (13).

4. Dispositif selon la revendication 3, dans lequel la tige (14) et l'embase (13) forment une seule et même pièce.

5. Dispositif selon l'une quelconque des revendications 1 à 4, comprenant une pointe d'écriture ou équivalent (16).

6. Dispositif selon la revendication 5, dans lequel la pointe d'écriture (16) est alimentée par un réservoir (18), ledit réservoir (18) étant disposé en tout ou partie à l'intérieur de la tige (14).

7. Dispositif selon l'une quelconque des revendications 1 à 6, dans lequel le corps (10) est en matériau polymérique isolant, en bois, en céramique, en verre, ou équivalent.

8. Dispositif selon l'une quelconque des revendications 1 à 7, dans lequel la couche (202) s'étend au moins en partie en recouvrement longitudinal avec la tige (14).

9. Dispositif selon l'une quelconque des revendications 1 à 8, dans lequel la couche (202) s'étend sur au moins 30% de la longueur de la tige (14).

10. Dispositif selon l'une quelconque des revendications 1 à 9, dans lequel la couche (202) comprend une feuille métallique ou un enduit conducteur.

11. Dispositif selon l'une quelconque des revendications 1 à 10, dans lequel la tige (14) est espacée du corps (10).

12. Dispositif selon l'une quelconque des revendications 1 à 11, dans lequel la tige et le corps sont sensiblement cylindriques, la tige et le corps présentant chacun une surface extérieure de forme sensiblement cylindrique, la distance radiale entre la surface extérieure de la tige et la surface extérieure du corps étant inférieure à 5 mm.

13. Dispositif selon l'une quelconque des revendications 1 à 12, du type passif.

## Patentansprüche

1. Manuelle Vorrichtung, umfassend einen länglichen Greifkörper (10) und ein Kissen für kapazitiven Bildschirm (12), das an einem Ende (10a) des Körpers (10) angebracht ist, bei der der Körper (10) isolierend ist, während das Kissen (12) leitend ist, bei der ein Stift (14) aus Polymermaterial, das mit wenigstens einem leitenden Material beladen ist und/oder eine leitende Beschichtung umfasst, mit dem Kissen (12) in elektrischem Kontakt steht und sich innerhalb des Körpers (10) in Längsrichtung erstreckt, und bei der der Körper (10) eine Außenfläche aufweist, wobei eine Schicht aus leitendem Material (202) auf der Außenfläche des Körpers (10) angeordnet ist, wobei die Schicht (202) von dem Kissen (12) getrennt ist.

2. Vorrichtung nach Anspruch 1, bei der der Stift (14) sich über mehr als 10 % der Länge des Körpers (10) erstreckt.

3. Vorrichtung (100, 200) nach Anspruch 1 oder 2, bei der das Kissen (12) an dem Körper (10) mittels eines leitenden Sockels (13) angebracht ist, während der Stift (14) mit dem Kissen (12) über den Sockel (13) in elektrischem Kontakt steht.

4. Vorrichtung nach Anspruch 3, bei der der Stift (14) und der Sockel (13) ein und dasselbe Teil bilden.

5. Vorrichtung nach einem der Ansprüche 1 bis 4, die eine Schreibspitze oder entsprechendes (16) umfasst.

6. Vorrichtung nach Anspruch 5, bei der die Schreibspitze (16) über einen Vorratsbehälter (18) versorgt wird, wobei der Vorratsbehälter (18) vollständig oder teilweise innerhalb des Stiftes (14) angeordnet ist.

7. Vorrichtung nach einem der Ansprüche 1 bis 6, bei der der Körper (10) aus isolierendem Polymermaterial, aus Holz, aus Keramik, aus Glas oder entsprechendem besteht.

8. Vorrichtung nach einem der Ansprüche 1 bis 7, bei der die Schicht (202) sich wenigstens teilweise längsüberlappend mit dem Stift (14) erstreckt.

9. Vorrichtung nach einem der Ansprüche 1 bis 8, bei der die Schicht (202) sich über wenigstens 30 % der Länge des Stiftes (14) erstreckt.

10. Vorrichtung nach einem der Ansprüche 1 bis 9, bei der die Schicht (202) eine Metallfolie oder einen leitenden Überzug umfasst.

11. Vorrichtung nach einem der Ansprüche 1 bis 10, bei der der Stift (14) von dem Körper (10) beabstandet ist.

12. Vorrichtung nach einem der Ansprüche 1 bis 11, bei der der Stift und der Körper im Wesentlichen zylindrisch sind, wobei der Stift und der Körper jeweils eine Außenfläche mit im Wesentlichen zylindrischer Form aufweisen, wobei der radiale Abstand zwischen der Außenfläche des Stiftes und der Außenfläche des Körpers weniger als 5 mm beträgt.

13. Vorrichtung nach einem der Ansprüche 1 bis 12, vom passiven Typ.

## Claims

1. A manual device comprising a longitudinal prehension body (10) and a pad (12) for a capacitive screen mounted on one end (10a) of said body (10), wherein the body (10) is insulating, while the pad (12) is conductive, wherein a rod (14) of polymer material filled with at least one conductive material and/or comprising a conductive coating is electrically in contact with the pad (12) and extends longitudinally inside the body (10), and wherein the body (10) presents an outside surface, a layer (202) of conductive material being arranged on the outside surface of the body (10), said layer (202) being insulated from the pad (12).

2. A device according to claim 1, wherein the rod (14) extends over more than 10% of the length of the body (10).

3. A device (100, 200) according to claim 1 or claim 2, wherein the pad (12) is mounted on the body (10) via a conductive base (13), while the rod (14) is electrically in contact with the pad (12) via the base (13).

4. A device according to claim 3, wherein the rod (14) and the base (13) form a single piece.

5. A device according to any one of claims 1 to 4, comprising a writing tip (16) or the equivalent.

6. A device according to claim 5, wherein the writing tip (16) is fed from a reservoir (18), said reservoir (18) being located in full or in part inside the rod (14).

7. A device according to any one of claims 1 to 6, wherein the body (10) is made of insulating polymer material, of wood, of ceramic, of glass, or the equivalent.

8. A device according to any one of claims 1 to 7, wherein layer (202) extends at least in part in longitudinal overlap with the rod (14).

9. A device according to any one of claims 1 to 8, wherein the layer (202) extends over at least 30% of the length of the rod (14).

10. A device according to any one of claims 1 to 9, wherein the layer (202) comprises a metal foil or a conductive laminate.

11. A device according to any one of claims 1 to 10, wherein the rod (14) is spaced apart from the body (10).

12. A device according to any one of claims 1 to 11, wherein the rod and the body are substantially cylindrical, the rod and the body each presenting an outside surface of substantially cylindrical shape, the radial distance between the outside surface of the rod and the outside surface of the body being less than 5 mm.

13. A device according to any one of claims 1 to 12, the device being of the passive type.
